# EUROPEAN PATENT SPECIFICATION

(11) **EP 1 820 100 B1**
(45) Date of publication and mention of the grant of the patent: **27.08.2008**
(21) Application number: 05826687.5
(22) Date of filing: 24.11.2005
(51) Int. Cl.: G06F 9/46, G06F 9/38

(54) **EFFICIENT SWITCHING BETWEEN PRIORITIZED TASKS**
EFFIZIENTE UMSCHALTUNG ZWISCHEN PRIORISIERTEN TASKS
BASCULEMENT EFFICACE ENTRE DES TACHES CLASSEES PAR ORDRE DE PRIORITE

(30) Priority: 30.11.2004 EP 04106190
(43) Date of publication of application: 22.08.2007
(73) Proprietor: Koninklijke Philips Electronics N.V., 5621 BA Eindhoven (NL)
(72) Inventor: HEIJLIGERS, Marcus, J., M., NL-5656 AA Eindhoven (NL); JUHASZ, Eleonora, NL-5656 AA Eindhoven (NL)
(74) Representative: Schouten, Marcus Maria
(86) International application number: PCT/IB2005/053897
(87) International publication number: WO 2006/072841

(56) References cited:
- EP-A- 0 706 126
- EP-A- 1 031 924
- MARC DURANTON: "From SANDRA project to CAT-IP: Architectures for pixel processing"[Online] 20 November 2003 (2003-11-20), XP002380286 Retrieved from the Internet: URL:http://ce.et.tudelft.nl/cecoll/slides/ delft_031120s.ppt> [retrieved on 2005-05-10]
- RAVINDRA JEJURIKAR AND RAJESH GUPTA: "Dual Mode Algorithm for Energy Aware Fixed Priority Scheduling with Task Synchronization" IN PROC. OF WORKSHOP ON COMPILERS AND OPERATING SYSTEMS FOR LOW POWER (COLP), [Online] September 2003 (2003-09), XP002385916 Retrieved from the Internet: URL:http://mesl.ucsd.edu//pubs/jerjurikar_ colp03.pdf> [retrieved on 2006-05-05]
- CHAMSI ET AL.: "The SANDRA project: cooperative architecture/compiler technology for embedded real-time streaming applications" RAPPORT DE RECHERCHE NO 4773, [Online] March 2003 (2003-03), XP002380285 Le Chesnay, France Retrieved from the Internet: URL:ftp://ftp.inria.fr/INRIA/publication/p ubli-pdf/RR/RR-4773.pdf> [retrieved on 2006-05-10]

## Description

The present invention relates to a processor device, method and computer program product for performing task scheduling to provide an efficient switching between prioritized tasks.

In traditional state of the art computers, task switching instruction sequences result in extensive expenditures of time spent for switching between tasks. The time spent between tasks is called the task change processing overhead. It is the time used for saving and restoring the registers and includes other delays such as time used in determining task priorities and task execution justification. Thus, these periods of time become unavailable for useful processing. In many modem computer or processor systems, such interrupt and task change processing overhead amounts to tens or hundreds of cycles.

In consumer applications, for example, some peripheral data needs to be processed in real time, whereas other tasks can be processed in a best effort way. Therefore, a program consists of high-priority tasks and low-priority tasks, and a dependency analysis is performed in order to derive time dependencies among the tasks. A main processor is usually provided for running general tasks, while a co-processor is used for running dedicated tasks in a time/power efficient way and needs to be configured upfront by a task running on the main processor. The goal is to find the shortest latency execution of the concerned program.

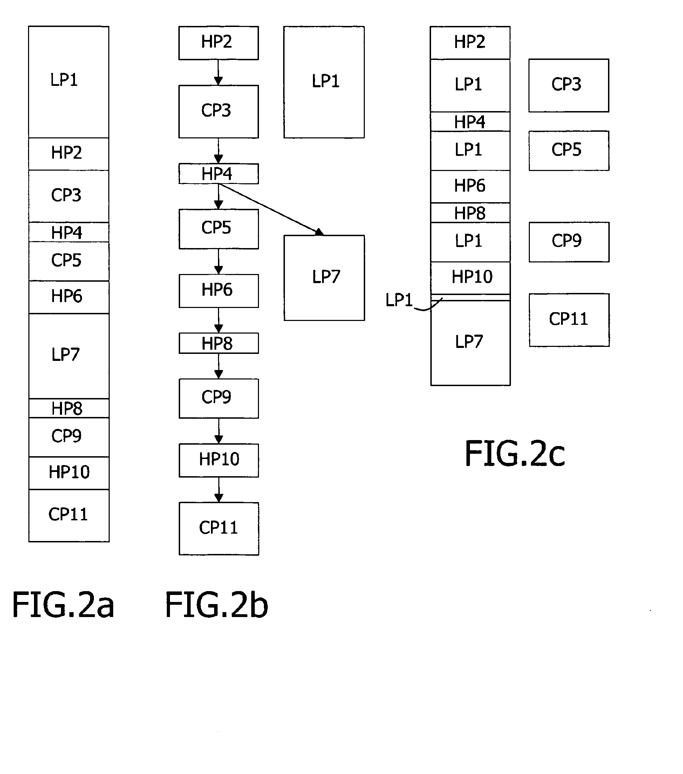

Fig. 2(a) shows an example of a program, and its most parallel execution. The initial program is written down in a sequential procedural language, such as C. It consists of high-priority tasks HPi, low-priority tasks LPi, and tasks CPi that can run on an independent co-processor. A compile-time dependency analysis determines the partial order of the tasks, as shown in the example of Fig. 2(b). According to Fig. 2(b), the low-priority task LP1 can be started immediately and does not have any dependency from other tasks, while the low-priority task LP7 is dependent from the execution of the high-priority task HP4. The dependencies of the high-priority tasks HP2, HP4, HP6, HP8, HP10 and the co-processor tasks CP3, CP5, CP9 and CUP11 can be gathered from their chronological order in Fig. 2(b), wherein each lower task of the diagram is dependent from the upper tasks and thus cannot be executed before completion of the upper tasks.

Fig. 2(c) shows the desired execution flow of this program. If any high-priority task is available for execution on the general or main processor, it should be started immediately. If there is no more high-priority task available for execution, the main processor can spend its time for executing low-priority tasks. Such a scheduling is known as pre-emptive scheduling and is described for example in J.L. Peterson et al., 'Operating System Concepts', Addison Wesley, 1986.

The dependency analysis can be simplified to an analysis where high-priority tasks and co-processor tasks are sequenced in the order of the C program, and where low-priority tasks are parallelized to this sequence as soon as possible.

However, because in general the delays of tasks are not known at compile time, the execution trace cannot be efficiently encoded in a single threaded assembly program.

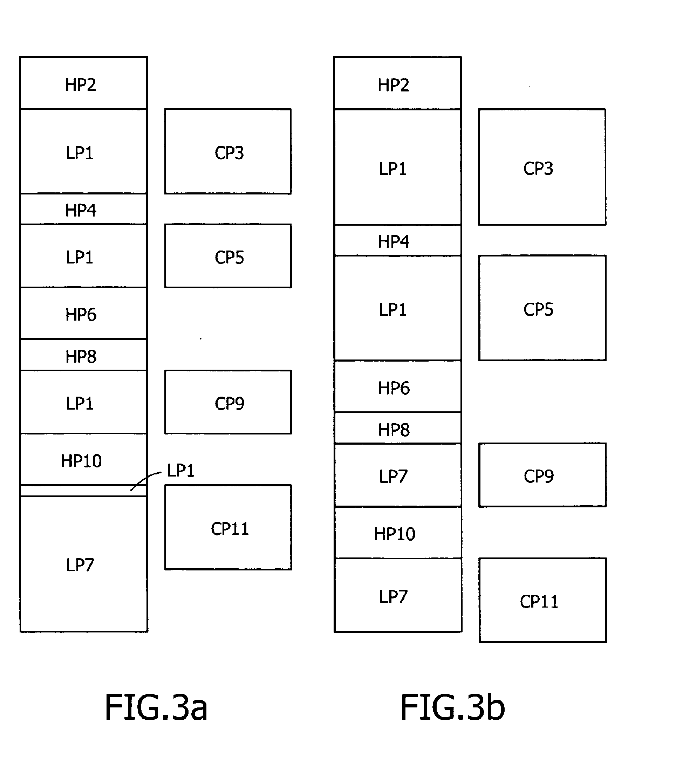

Fig. 3 shows an example of two different execution traces which result from the same program and its dependency analysis and which are caused by different run-time delays of the co-processor tasks CP3 and CP5. In particular, Fig. 3(a) shows a first execution trace, where the co-processor tasks CP3 and CP5 are executed at short run-time delays, so that high-priority tasks can be performed at earlier stages. In contrast thereto, Fig. 3(b) shows a second execution trace, where the co-processor tasks CP3 and CP5 take more cycles, so that the main processor has longer waiting periods for executing the low-priority task LP1 and the high-priority tasks HP6, HP8 and HP 10 are executed at a later stage.

Consequently, the execution trace cannot be determined in advance and task switching should be a run-time activity. Depending on the available tasks, an operating system will allocate the tasks to processors based on their priorities. To achieve this, a heap or priority queue is generally used to store tasks and their priorities. This is described for example in T.H. Cormen et al., 'Introduction to algorithms', MIT Press, 1990. A disadvantage of this proposal is that storing/retrieving of tasks from such a structure takes large number of processing cycles. This limits the applicability of task switching to large grain tasks which consist of many cycles compared to the number of tasks, because otherwise the task switching overhead would be significant, and can even result in a loss of cycles compared to sequential execution of the program.

However, in domains or applications where the tasks are fine-grained, this approach is not useful and a task switching with preferably zero cycles is desired.

EP-A-0 706 126 relates to a processor device with multiple processors which switch between tasks of different priorities.

Marc Duranton describes in 'From SANDRA project to CAT-IP: Architectures for pixel processing' synchronizing interdependent tasks which are executed in parallel.

Similarly, Jejurikar and Gupta present in 'Dual Mode Algorithm for Energy Aware Fixed Priority Scheduling with Task Synchronization' synchronizing parallel tasks with interdependencies.

It is therefore an object of the present invention to provide an improved task scheduling approach, by means of which parallel task switching can be performed without the disadvantage of storing and retrieving costs.

This object is achieved by a processor device as claimed in claim 1, a task scheduling method as claimed in claim 8, and a computer program product as claimed in claim 12.

Accordingly, task switching is executed by accessing at least two memory stacks in response to synchronization instructions inserted to the program routine. Initial push of tasks will take one cycle and meanwhile the synchronizing instructions can be invoked simultaneously with the usual program instructions and allow for task switching with no overhead. Thus, efficient switching between prioritized tasks can be achieved.

A runtime handling means may be provided for monitoring the at least two memory stacks and for providing access to the top of a non-empty memory stack with the highest priority. Thereby, it can be assured that high-priority tasks will be prioritized over low-priority tasks when accessing the memory stacks.

The synchronization instructions may comprise a start instruction for setting a program counter of one of the processor means to a given task address and for popping a current tasks of another one of the processor means from a high-priority one of the at least two memory stacks. This instruction provides an efficient switching between high-priority tasks of processor means.

Furthermore, the synchronization instructions may comprise a stop instruction for pushing a given task on a high priority one of the at least two memory stacks, and for replacing the top of a low-priority one of the at least two memory stacks with a next task address of one of the processor means. This instruction provides for an efficient back-switching after execution of a dependent task at the other processor means.

Finally, the synchronization instructions may comprise a hold instruction for popping a current task from a high-priority one of the at least two memory stacks and for storing a given task address. This optional hold instruction can be used advantageously in connection with pre-emptive high-priority tasks.

The task switching means may be adapted to derive the given task address from the instruction itself. As the given task address is already included in the synchronization instruction, no additional task switching cycles are required for address retrieval.

The insertion of the synchronization instructions into the assembly code of the program routine may be based on an analyzing step of dependences of tasks of the program routine. Thereby, an automatic modification of the assembly code can be achieved without requiring any external interaction.

The switching between low- and high-priority tasks can be invoked simultaneously with usual or conventional instructions of the program routine. By this measure, additional processing cycles for task switching can be prevented.

The present invention will now be described based on a preferred embodiment with reference to the accompanying drawings in which:
Fig. 1 shows a schematic block diagram of a processor device according to the preferred embodiment,
Fig. 2 shows a schematic diagram of an example of a parallelized execution flow with task switching;
Fig. 3 shows schematic representations of different execution traces depending on run-time delays;
Fig. 4 shows a double-sided stack memory and alternative separate stack memories for different priority levels, according to the preferred embodiment;
Fig. 5 shows a schematic flow diagram of an execution of synchronization instructions without overhead;
Fig. 6 shows a schematic flow diagram of an execution of synchronization instructions which allow pre-emption of high-priority tasks, according to the preferred embodiment;
Fig. 7 shows a schematic flow diagram showing a first example of execution of synchronization instructions according to the preferred embodiment;
Fig. 8 shows a schematic flow diagram showing a second example of execution of synchronization instructions according to the preferred embodiment; and
Fig. 9 shows a schematic flow diagram of the processing of synchronization instructions according to the preferred embodiment.

The preferred embodiment will now be described for a processor device having a main processor 20 and a co-processor 30 for performing task switching of two-level priority tasks based on a double-sided stack 60 with support functions.

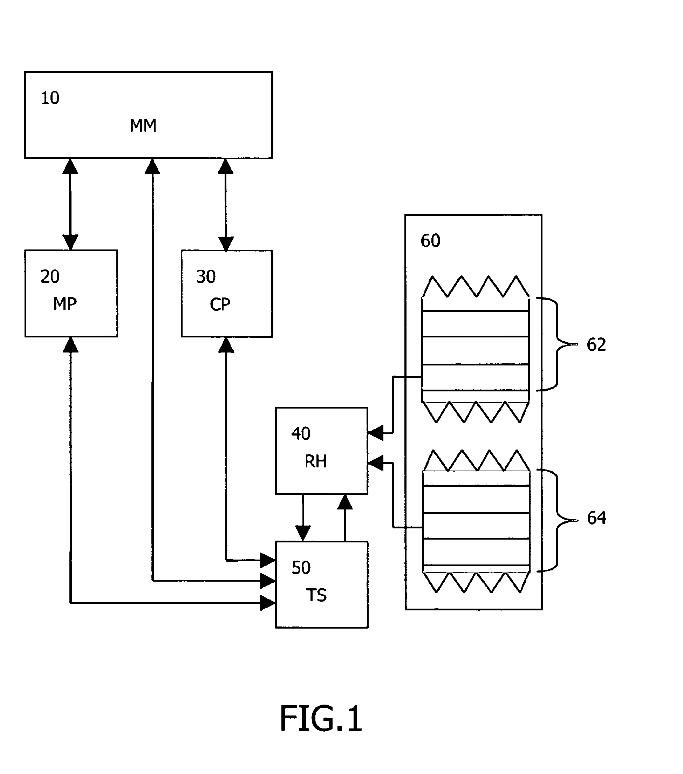

Fig. 1 shows a schematic block diagram of the proposed architecture which comprises a main processor 20 and a co-processor 30 for dedicated tasks, which both have own access to a memory system 10 in which program codes or routines and processing data are stored. At least a portion of the memory system 10, which may consist of a single or a plurality of memory circuits or devices, may be shared by both processors, which means that both processors may access the same shared memory locations. The main processor 20 may host an operating system which performs various functions including system memory management, system task management and other native tasks running on the system.

Furthermore, a task scheduling function or unit 50 is provided for controlling switching of tasks between the main processor 20 and the co-processor 30. According to the preferred embodiment, prioritized tasks are stored in respective priority-dependent stacks of a stack memory 60 which can be accessed by the task switching unit 50 via a runtime handling function or unit 40 which manages access to the stack memory 60. It is to be noted that the task scheduling unit 50 and the runtime handling unit 40 may be implemented as separate software or hardware functions or may be provided as a part of the operating system running on the main processor 20. However, it is to be noted that the software implementation naturally leads to a tradeoff with regard to efficiency.

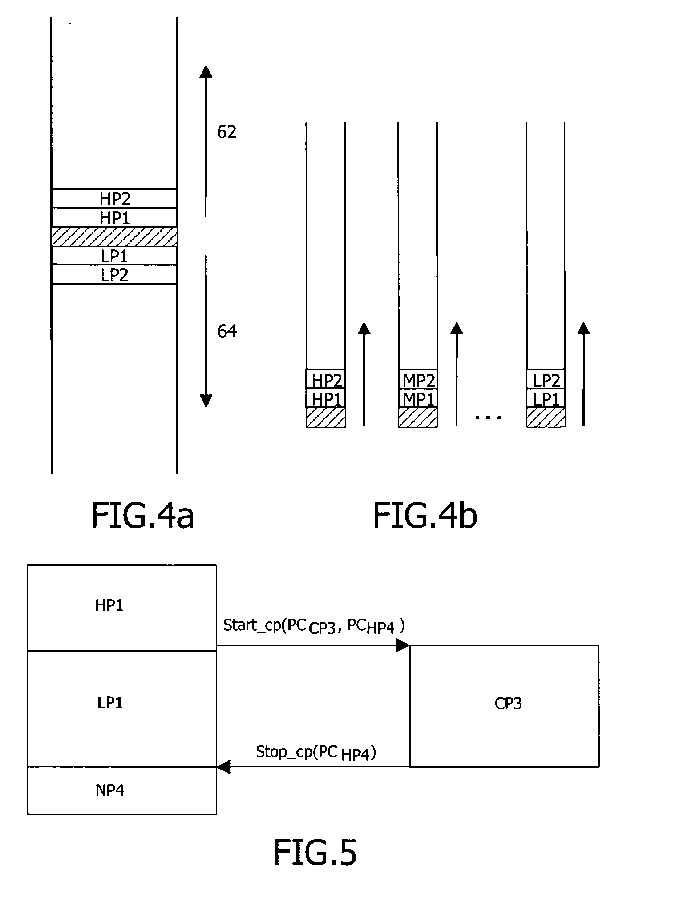

Fig. 4(a) shows a first example of the stack memory 60 arranged as a double-sided stack, wherein the runtime handling unit 40 provides support for task switching. In the present example, task switching is restricted to two-level priority tasks, which may be used in a corresponding digital signal processing context with high-priority tasks and low-priority tasks. To this end, the stack memory 60 comprises a low-priority stack 64 and a high-priority stack 62 which may be separated by an empty stack or stack field or by a predetermined bit or information pattern (as indicated by the hatched portion in Fig. 4(a)).

However, the present invention is not restricted to a double-sided stack or two separate stack memories. It can be extended to use separate stacks for different levels of priority, e.g. high priority, medium priority, low priority or even more levels of priority.

Fig. 4(b) shows a second example of the stack memory 60, where separate stack memories each representing a dedicated level of priority are provided. The lowest stack field (as indicated by the hatched portion) is empty or contains a predetermined information indicating the end of the stack.

In general, the above stack memory may be implemented based on any stack mechanism in any kind of memory device or circuit.

Referring back to Fig. 1, the task scheduling unit 50 can access both main processor 20 and co-processor 30. Furthermore, the task scheduling unit 50 can access the memory system 10. The task scheduling unit 50 in connection with the runtime handling unit 40 and the stack memory 60 will support task switching by handling synchronization instructions at runtime. The instructions will be inserted into the assembly code of a program or routine stored in the memory system 10, based on the results of a dependency analysis which may be performed by the operating system. Initial push of tasks to the stack memory 60 will take one cycle and meanwhile the synchronizing instructions such as the start of a co-processor task, the finishing of a co-processor task and the switching between low- and high-priority tasks are invoked simultaneously with the usual instruction. The incorporation of the additional synchronization instructions may be achieved simply by adding an extra bit to the usual instructions, to thereby allow task switching with no overhead.

Fig. 5 shows a schematic flow diagram indicating execution of synchronization instructions without overhead. The synchronization instructions are attached to the usual instructions. In the example of Fig. 5, a start instruction 'Start_cp(CP_address, HP_address)' is inserted at the end of a high-priority task HP2, so as to set the co-processor's program counter to the given address 'CP_address', and to pass the high-priority task's next address 'HP_address'. Furthermore, this start instruction leads to a pop operation which pops the high-priority task calling the co-processor 30 from the high-priority stack 62 of the stack memory 60. At the end of the co-processor task CP3, a stop instruction 'Stop cp(HP_address)' is incorporated, which replaces the top of the low-priority stack 64 with the low-priority task's next address 'LP_address' and pushes the high-priority task's next address 'HP_address' on the low-priority stack 64.

The runtime handling unit 40 observes both high-priority stack 62 and low-priority stack 64 and executes tasks on top of the high-priority stack 62, and if no task is left there, it will execute tasks on top of the low-priority stack 64.

Synchronization instructions are thus inserted or incorporated into the assembly code, to thereby control task switching. The stack memory 60 with the runtime handling unit 40 and the task switching unit 50 will support task switching by handling these synchronization instructions at runtime. In the above case of a non-pre-emptive high-priority tasks, a start instruction and a stop instruction may be used.

As an alternative or modification, an additional hold instruction may be provided for pre-emptive high-priority tasks, as explained in the following.

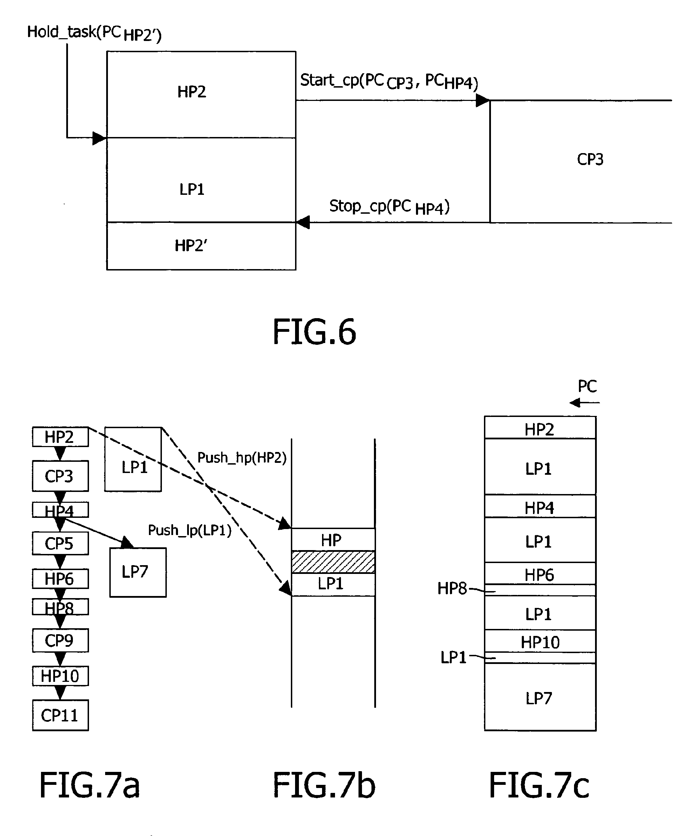

Fig. 6 shows a schematic flow diagram of corresponding synchronization instructions executed without overhead, which allow pre-emption of high-priority tasks at critical dependencies. This solution can be used in cases where a more detailed dependence analysis is performed, allowing a high-priority task to proceed its execution towards the point that actually requires information from the co-processor task.

According to Fig. 6, during execution of the high-priority task HP2, a start instruction 'Start_cp(CP_addressl' is inserted, which sets the co-processor's program counter to a given address 'CP_address'. Furthermore, a hold instruction 'Hold_task (HP_address)' is inserted, which pops the current high-priority task from the high-priority stack 62 and stores the high-priority task's next address 'HP_address'. After execution of the co-processor task CP3, a stop instruction 'Stop_cp' is added which saves the low-priority task's next address to the low-priority stack 64 if a high-priority task is on hold, and pushes the high-priority task's next address on the high-priority stack 62.

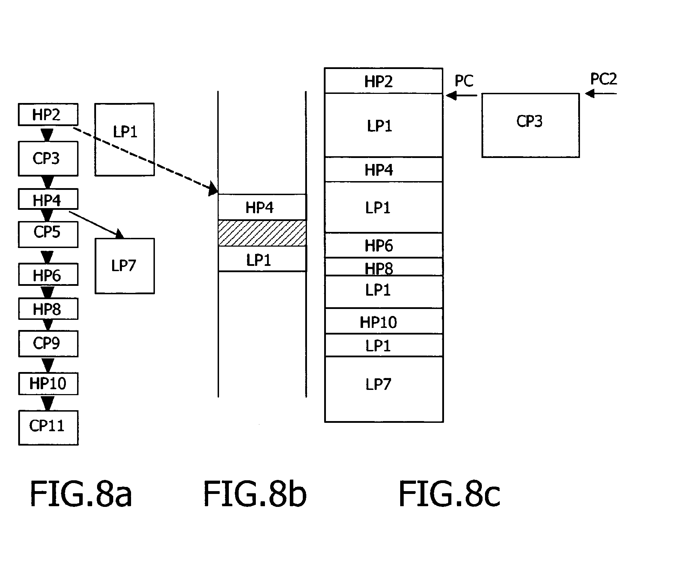

In the following, a processing example is explained with reference to Figs. 7 and 8. This example is based on the non-preemptive synchronization instructions of Fig. 5.

In particular, Fig. 7(a) indicates the result of the dependency analysis of the operating system, Fig. 7(b) indicates contents of the stack memory 60, and Fig. 7(c) indicates the running program of the main processor 20. When a high-priority task appears, it will be pushed by the task scheduling unit 50 via the runtime handling unit 40 on top of the high-priority stack 62, causing the program counter of the main processor 20 to switch to a memory address of the memory system 10 where this high-priority task HP2 is located. Similarly, the first low-priority task LP1 will be pushed on the top of the low-priority stack 64 by a corresponding push operation.

Fig. 8 shows a situation when the first high-priority task HP2 has been finished and issues a switch instruction. If the high-priority stack 62 contains the next high-priority task HP4, the runtime handling unit 40 will control access to the stack memory 60 in such a manner that the high-priority task HP4 will be executed as long as the task scheduling unit 50 does not determine that it has dependency on the co-processor task CP3 running simultaneously. If the high-priority stack 62 is empty or the next high-priority task on the high-priority stack 62 has a dependency on the simultaneously running co-processor task CP3 (which means that the high-priority task HP4 has to wait until the co-processor 30 is finished, as indicated in Fig. 8(a)), the program counter will jump to the first low-priority task LP1 on the low-priority stack 64 and execute this task until an interrupt from the co-processor 30 has been received. This interrupt causes the low-priority task LP1 to abort and changes the program counter to the next high-priority task HP4 in the line or queue of the high-priority stack 62.

According to the preferred embodiment, support for procedural languages is maintained as long as function invocations triggered by the synchronization instructions are treated as calls or jumps to high-priority or co-processor tasks. The corresponding function is pushed on top of the high-priority stack 62 or invoked as a co-processor task.

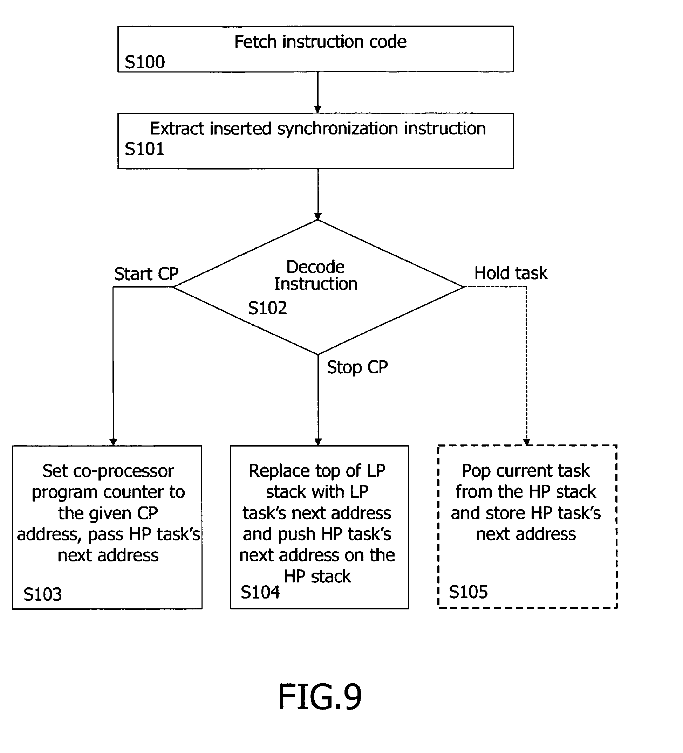

Fig. 9 shows a schematic flow diagram of a control procedure as executed by the task scheduling unit 50. In step S 100, a next instruction code (assembly code) is fetched from the memory system 10 and, if provided, a synchronization instruction is extracted in step S 101. Then, the synchronization instruction is decoded in step S 102 to determine the kind of synchronization instruction for task scheduling. In accordance with the preferred embodiment, the decoding step S102 may determine a start instruction for the co-processor 30, so that the procedure branches to a step S 103 in which the program counter PC2 of the co-processor 30 is set to the given co-processor address, and the high-priority task's next address is passed. On the other hand, if a stop instruction for the co-processor 30 is detected in the decoding step S 102, the procedure branches to step S 104, where the task scheduling unit 50 acts to replace the top of the low-priority stack 64 with the low-priority task's next address and to push the high-priority tasks next address on the high-priority stack 62. In the optional case that pre-emptive high-priority tasks are allowed or implemented, a hold instruction may be decoded in step S 102 and the procedure may then branch to step S105, so that the task scheduling unit 50 acts to pop the current task from the high-priority stack 62 and to store the high-priority tasks next address. Thereby, a high efficient task switching between prioritized tasks can be achieved as a zero-cycle task switching option for fine-grained tasks.

In summary, a task scheduling scheme is suggested, where tasks of a program routine are selectively stored in at least two memory stack mechanisms of different priorities based on the allocated priorities. Switching of tasks executed at at least two processor means is controlled by accessing the at least two memory stack mechanisms in response to synchronization instructions inserted to the program routine. Thereby, efficient zero-cycle task switching between prioritized tasks can be achieved.

It is noted that the proposed solution according to the above preferred embodiment can be introduced in any main/co-processor scenario with reservation for eventual extra cycles for context switches or state savings in case of shared registers. In particular, the invention is applicable in any domain where tasks can fill empty processing slots when no high-priority tasks are executed. Examples for such domains are image vision, game applications with user interaction and background scenes, security applications with dangerous and non-dangerous situations, collision detection applications with dangerous and non-dangerous situations, GPS (Global Positioning System) applications with wrong direction processing and route following processing, real-time signal processing with streaming processing and user interface processing, mobile phone applications with phone call processing and game processing,

Furthermore, it is noted that the structure of the stack memory 60 is not restricted to the above double-sided memory stack, and any kind of stack memory or stack memory mechanism in other types of memories can be used. Furthermore, the present invention can be used for switching tasks between more than two processor devices. Of course, other synchronization instructions with other notations can be used for controlling task switching in connection with the stack memory 60. They may be incorporated or added to the conventional or usual program instructions in any way or length. The preferred embodiments may thus vary within the scope of the attached claims.

It should further be noted that the above-mentioned embodiment illustrates rather than limits the invention, and that those skilled in the art will be capable of designing many alternative embodiments without departing from the scope of the invention as defined in the dependent claims. In the claims, any reference signs placed in parenthesis shall not be construed as limiting the claims. The words 'comprising' and 'comprises', do not exclude the presence of elements or steps other than those listed in any claim The singular reference of an element does not exclude the plural reference of such elements and vice versa. If certain measures are recited in mutually different dependent claims, this does not indicate that a combination of these measures cannot be used to advantage.

## Claims

1. A processor device comprising:
a) at least two processor means (20, 30) having own memory access for processing tasks of a program routine based on priorities allocated to said tasks;
**characterized by**
b) at least two memory stack mechanisms (62, 64) of different priorities for selectively storing tasks based on their allocated priorities; and
c) task switching means (50) for controlling switching of tasks executed at said at least two processor means (20, 30) by accessing said at least two memory stacks (62, 64) in response to synchronization instructions inserted to said program routine.

2. A device according to claim 1, further comprising runtime handling means (40) for monitoring said at least two memory stack mechanisms (62, 64) and for providing access to the top of a non-empty memory stack mechanism with the highest priority.

3. A device according to claims 1 or 2, wherein said synchronization instructions comprise a start instruction for setting a program counter of one (30) of said processor means to a given task address and for popping a current task of another one (20) of said processor means from a high-priority one (62) of said at least two memory stack mechanisms (62, 64).

4. A device according to claims 1 or 2, wherein said synchronization instructions comprise a stop instruction for pushing a given task on a high-priority one (62) of said at least two memory stack mechanisms (62, 64), and for replacing the top of a low-priority one (64) of said at least two memory stack mechanisms (62, 64) with a next task address of one (20) of said processor means.

5. A device according to claim 1 or 2, wherein said synchronization instructions comprise a hold instruction for popping a current task from a high-priority one (62) of said at least two memory stack mechanisms (62, 64) and for storing a given task address.

6. A device according to any one of claims 3 to 5, wherein said task switching means (50) is adapted to derive said given task address from said instruction.

7. A device according to any one of the preceding claims, wherein said synchronization instruction is attached as an additional bit to an instruction of said program routine.

8. A method of performing task scheduling in a processor device having at least two processor means (20, 30) with own memory access, said method comprising the steps of:
a) selectively storing tasks of a program routine in at least two memory stack mechanisms (62, 64) of different priorities based on the allocated priorities;
b) inserting synchronization instructions to said program routine; and
c) controlling switching of tasks executed at said at least two processor means (20, 30) by accessing said at least two memory stack mechanisms (62, 64) in response to said synchronization instructions.

9. A method according to claim 8, further comprising the steps of analyzing dependencies of tasks of said program routine and inserting said synchronization instructions into assembly code of said program routine based on the result of said analyzing step.

10. A method according to claim 8 or 9, wherein said synchronization instructions comprise a start instruction for starting a task at one of said processor means, a stop instruction for stopping a task at one of said processor means, and a hold instruction for holding a task at one of said processor means.

11. A method according to any one of claims 8 to 10, further comprising the step of invoking switching between low- and high-priority tasks simultaneously with usual instructions of said program routine.

12. A computer program product comprising code means for controlling a processor device to execute the steps of any one of claims 8 to 11 when loaded to a memory of said processor device.

## Patentansprüche

1. Prozessorvorrichtung mit:
a) mindestens zwei Prozessormitteln (20, 30) mit eigenem Speicherzugriff zur Verarbeitung von Aufgaben einer Programmroutine basierend auf den genannten Aufgaben zugewiesenen Prioritäten;
**gekennzeichnet durch**
b) mindestens zwei Speicherstapelmechanismen (62, 64) von unterschiedlicher Priorität zum selektiven Speichern von Aufgaben basierend auf ihren zugewiesenen Prioritäten; und
c) Aufgabenumschaltungsmittel (50) zum Steuern des Umschaltens von bei den genannten mindestens zwei Prozessormitteln (20, 30) ausgeführten Aufgaben, indem es in Reaktion auf in die genannte Programmroutine eingefügten Synchronisierungsanweisungen auf die genannten mindestens zwei Speicherstapel (62, 64) zugreift.

2. Vorrichtung nach Anspruch 1, weiterhin mit Laufzeithandhabungsmitteln (40) zur Überwachung der genannten mindestens zwei Speicherstapelmechanismen (62, 64) und zum Gewähren des Zugriffs auf den oberen Teil eines nicht leeren Speicherstapelmechanismus mit der höchsten Priorität.

3. Vorrichtung nach Anspruch 1 oder 2, wobei die genannten Synchronisierungsanweisungen eine Startanweisung zum Einstellen eines Programmzählers von einem (30) der genannten Prozessormittel auf eine gegebene Aufgabenadressse und zum Abheben einer aktuellen Aufgabe des anderen (20) der genannten Prozessormittel von einem hochpriorisierten (62) der genannten mindestens zwei Speicherstapelmechanismen (62, 64) umfassen.

4. Vorrichtung nach Anspruch 1 oder 2, wobei die genannten Synchronisierungsanweisungen eine Stoppanweisung zum Drauflegen einer gegebenen Aufgabe auf einen hochpriorisierten (62) der genannten mindestens zwei Speicherstapelmechanismen (62, 64) und zum Ersetzen des oberen Teils eines niedrigpriorisierten (64) der genannten mindestens zwei Speicherstapelmechanismen (62, 64) durch eine nächste Aufgabenadresse von einem (20) der genannten Prozessormittel umfassen.

5. Vorrichtung nach Anspruch 1 oder 2, wobei die genannten Synchronisierungsanweisungen eine Halteanweisung zum Abheben einer aktuellen Aufgabe von einem hochpriorisierten (62) der genannten mindestens zwei Speicherstapelmechanismen (62, 64) und zum Speichern einer gegebenen Aufgabenadresse umfassen.

6. Vorrichtung nach einem der Ansprüche 3 bis 5, wobei das genannte Aufgabenumschaltungsmittel (50) dafür ausgelegt ist, die genannte gegebene Aufgabenadresse von der genannten Anweisung abzuleiten.

7. Vorrichtung nach einem der vorhergehenden Ansprüche, wobei die genannte Synchronisierungsanweisung als ein zusätzliches Bit an eine Anweisung der genannten Programmroutine angehängt ist.

8. Verfahren zur Durchführung einer Aufgabenverwaltung in einer Prozessorvorrichtung mit mindestens zwei Prozessormitteln (20, 30) mit eigenem Speicherzugriff, wobei das genannte Verfahren die folgenden Schritte umfasst:
a) selektives Speichern von Aufgaben einer Programmroutine in mindestens zwei Speicherstapelmechanismen (62, 64) von unterschiedlicher Priorität basierend auf den zugewiesenen Prioritäten;
b) Einfügen von Synchronisierungsanweisungen in die genannte Programmroutine; und
c) Steuern der Umschaltung von bei den genannten mindestens zwei Prozessormitteln (20, 30) ausgeführten Aufgaben, indem in Reaktion auf die genannten Synchronisierungsanweisungen auf die genannten mindestens zwei Speicherstapelmechanismen (62, 64) zugegriffen wird.

9. Verfahren nach Anspruch 8, das weiterhin Schritte umfasst, um Abhängigkeiten der Aufgaben der genannten Programmroutine zu analysieren und die genannten Synchronisierungsanweisungen basierend auf dem Ergebnis des genannten Analyseschritts in den Assemblercode der genannten Programmroutine einzufügen.

10. Verfahren nach Anspruch 8 oder 9, wobei die genannten Synchronisierungsanweisungen eine Startanweisung zum Starten einer Aufgabe bei einem der genannten Prozessormittel, eine Stoppanweisung zum Stoppen einer Aufgabe bei einem der genannten Prozessormittel und eine Halteanweisung zum Anhalten einer Aufgabe bei einem der genannten Prozessormittel umfassen.

11. Verfahren nach einem der Ansprüche 8 bis 10, weiterhin umfassend den Schritt des Veranlassens einer Umschaltung zwischen niedrig- und hochpriorisierten Aufgaben gleichzeitig mit üblichen Anweisungen der genannten Programmroutine.

12. Computerprogrammprodukt mit Codemitteln zum Steuern einer Prozessorvorrichtung zur Ausführung der Schritte von einem der Ansprüche 8 bis 11, wenn sie in einen Speicher der genannten Prozessorvorrichtung geladen sind.

## Revendications

1. Dispositif de processeur comprenant:
a) au moins deux moyens de processeur (20, 30) ayant accès à la mémoire propre pour traiter des tâches d'une routine de programme sur la base de priorités qui sont affectées audites tâches;
**caractérisé par**
b) au moins deux mécanismes de pile de mémoire (62, 64) de priorités différentes pour stocker sélectivement des tâches sur la base de leurs priorités affectées; et
c) des moyens de commutation de tâches (50) pour commander la commutation de tâches qui sont exécutées audits au moins deux moyens de processeur (20, 30) par l'accès desdits au moins deux mécanismes de pile de mémoire (62, 64) en réaction aux instructions de synchronisation qui sont insérées dans ladite routine de programme.

2. Dispositif selon la revendication 1, comprenant encore des moyens de manipulation de temps d'exécution (40) pour contrôler lesdits au moins deux mécanismes de pile de mémoire (62, 64) et pour permettre l'accès au sommet d'un mécanisme non vide de pile de mémoire avec la plus haute priorité.

3. Dispositif selon la revendication 1 ou 2, dans lequel lesdites instructions de synchronisation comprennent une instruction de début pour régler un compteur de programmes d'un (30) desdits moyens de processeur à une adresse de tâche donnée et pour remplacer une tâche actuelle d'un autre (20) desdits moyens de processeur par une de haute priorité (62) desdits au moins deux mécanismes de pile de mémoire (62, 64).

4. Dispositif selon la revendication 1 ou 2, dans lequel lesdites instructions de synchronisation comprennent une instruction d'arrêt pour pousser une tâche donnée sur une de haute priorité (62) desdits au moins deux mécanismes de pile de mémoire (62, 64 et pour remplacer le sommet d'une de basse priorité (64) desdits au moins deux mécanismes de pile de mémoire (62, 64) par une adresse de tâche suivante d'un (20) desdits moyens de processeur.

5. Dispositif selon la revendication 1 ou 2, dans lequel lesdites instructions de synchronisation comprennent une instruction de maintien pour remplacer une tâche actuelle par une de haute priorité (62) desdits au moins deux mécanismes de pile de mémoire (62, 64) et pour stocker une adresse de tâche donnée.

6. Dispositif selon l'une quelconque des revendications précédentes 3 à 5, dans lequel lesdits moyens de commutation de tâches (50) sont adaptés de manière à dériver de ladite instruction ladite adresse de tâche donnée.

7. Dispositif selon l'une quelconque des revendications précédentes 1 à 6, dans lequel ladite instruction de synchronisation est jointe en tant qu'un bit additionnel à une instruction de ladite routine de programme.

8. Procédé d'exécution de la programmation de tâches dans un dispositif de processeur ayant au moins deux moyens de processeur (20, 30) avec accès à la mémoire propre, ledit procédé comprenant les étapes consistant à:
a) stocker sélectivement les tâches d'une routine de programme dans au moins deux mécanismes de pile de mémoire (62, 64) de priorités différentes sur la base des priorités affectées;
b) insérer les instructions de synchronisation dans ladite routine de programme; et
c) commander la commutation de tâches qui sont exécutées audits au moins deux moyens de processeur (20, 30) par l'accès desdits au moins deux mécanismes de pile de mémoire (62, 64) en réaction audites instructions de synchronisation.

9. Procédé selon la revendication 8, comprenant encore les étapes consistant à analyser les dépendances de tâches de ladite routine de programme et à insérer lesdites instructions de synchronisation dans le code d'ensemble de ladite routine de programme sur la base du résultat de ladite étape d'analyse.

10. Procédé selon la revendication 8 ou 9, dans lequel lesdites instructions de synchronisation comprennent une instruction de début pour commencer une tâche à un desdits moyens de processeur, une instruction d'arrêt pour arrêter une tâche à un desdits moyens de processeur et une instruction de maintien pour maintenir une tâche à un desdits moyens de processeur.

11. Procédé selon l'une quelconque des revendications précédentes 8 à 10, comprenant encore l'étape consistant à invoquer la commutation entre les tâches de basse et de haute priorité simultanément avec les instructions habituelles de ladite routine de programme.

12. Produit de programme informatique comprenant des moyens de code pour commander un dispositif de processeur de manière à exécuter les étapes selon l'une quelconque des revendications précédentes 8 à 11 lorsqu'il est chargé dans une mémoire dudit dispositif de processeur.
